# FASCICULE DE BREVET EUROPEEN

(11) **EP 3 286 470 B1**
(45) Date de publication et mention de la délivrance du brevet: **29.03.2023**
(21) Numéro de dépôt: 16722302.3
(22) Date de dépôt: 22.04.2016
(51) Int. Cl.: F16K 41/08, F16J 15/10, F02M 26/67

(54) **ENSEMBLE POUR UNE VANNE**
ANORDNUNG FÜR EIN VENTIL
ASSEMBLY FOR A VALVE

(30) Priorité: 24.04.2015 FR 1553687
(43) Date de publication de la demande: 28.02.2018
(73) Titulaire: Valeo Systèmes de Contrôle Moteur, 95800 Cergy Saint Christophe (FR)
(72) Inventeur: RAMOND, Daniel, 63340 Augnat (FR)
(74) Mandataire: Valeo Powertrain Systems
(86) Numéro de dépôt international: PCT/FR2016/050964
(87) Numéro de publication internationale: WO 2016/170291

(56) Documents cités:
- FR-A1- 2 914 975
- GB-A- 2 242 505
- JP-A- 2006 090 200
- US-A1- 2010 242 927

## Description

La présente invention concerne un ensemble pour une vanne de véhicule automobile, notamment une vanne EGR.

On connait par la demande de brevet FR 2 914 975 une vanne EGR comprenant une soupape pouvant être déplacée en coulissement grâce à un mécanisme transformant une rotation en translation. Un ensemble pour une vanne selon le préambule de la revendication 1 est divulgué dans GB 2 242 505 A.

L'invention vise à améliorer ce type de dispositif.

L'invention a ainsi pour objet un ensemble pour une vanne de véhicule automobile, cet ensemble comportant :
- un corps de vanne,
- une tige de soupape pouvant coulisser par rapport au corps de vanne,
- un guide agencé pour guider la tige lorsque cette tige coulisse,
- un joint agencé pour assurer l'étanchéité autour de la tige, ce joint étant placé entre le corps de vanne et le guide, ce joint venant en contact avec le corps de vanne selon deux appuis étanches distincts.

Grâce à l'invention, les deux appuis étanches du joint sur le corps de vanne permettent d'augmenter la qualité de l'étanchéité. Ceci est particulièrement avantageux lorsqu'il est nécessaire d'avoir une fuite aussi faible que possible pendant la durée de vie de la vanne, en particulier lorsqu'il s'agit d'une vanne EGR. Dans ce cas d'une vanne EGR, il est nécessaire d'avoir la plus petite fuite de gaz d'échappement de la vanne que possible.

L'invention est particulièrement adaptée pour un ensemble assurant une étanchéité vis-à-vis de gaz, notamment de gaz d'échappement.

En outre, selon l'invention, le guide comporte un renfoncement en regard de la tige, ce renfoncement s'étendant au moins partiellement autour de la tige, et le joint comporte une lèvre, notamment une lèvre intérieure, s'étendant au moins partiellement dans le renfoncement ménagé par le guide. Ceci permet de déformer le joint pour le soumettre à une certaine contrainte axiale, suivant l'axe de coulissement de la tige. Durant cette mise sous contrainte, le joint se déforme quelque peu et cette lèvre intérieure se déplace vers le renfoncement.

Avantageusement, la lèvre intérieure vient en appui étanche contre la tige. Cette tige de soupape, lors de ses déplacements, glisse sur le joint en préservant l'appui étanche.

Dans un exemple de mise en oeuvre de l'invention, la lèvre intérieure est en contact avec le renfoncement du guide, notamment avec un fond du renfoncement.

En variante, la lèvre intérieure est distante du renfoncement du guide.

Le joint peut comporter une lèvre extérieure autour de la lèvre intérieure, cette lèvre extérieure venant en appui étanche avec le corps de vanne, notamment avec une paroi longitudinale du corps de vanne.

Le cas échéant, la lèvre extérieure se raccorde à la lèvre intérieure via un bandeau annulaire.

Le bandeau annulaire comporte avantageusement une concavité tournée vers le guide.

De préférence, le bandeau du joint vient en appui étanche avec le corps de vanne, notamment avec une paroi transversale du corps de vanne.

Le joint est avantageusement contraint, à savoir soumis à des contraintes, de manière permanente axialement, selon l'axe de coulissement de la tige de soupape, lorsqu'il est en place dans l'ensemble, notamment par appui du bandeau du joint sur le corps de vanne. Ceci permet d'avoir un appui étanche efficace.

Le cas échéant, le joint est contraint de manière permanente transversalement, selon un axe perpendiculaire à l'axe de coulissement de la tige de soupape, lorsqu'il est en place dans l'ensemble.

De préférence, le joint définit trois appuis étanches, notamment l'un d'eux sur la lèvre intérieure, l'un d'eux sur la lèvre extérieure et l'un d'eux sur le bandeau.

Par exemple, le joint est réalisé d'un seul tenant.

Si on le souhaite, la lèvre intérieure du joint présente une forme annulaire.

Dans un exemple de mise en oeuvre de l'invention, la lèvre extérieure du joint présente une forme annulaire.

La lèvre intérieure présente notamment un diamètre intérieur compris entre 5mm et 5.5mm.

Le joint est réalisé notamment en matériau à base de PTFE, par exemple commercialisé sous la marque Rulon^{®}.

Le guide est réalisé notamment en matériau, par exemple du bronze, fritté ou usiné.

Le renfoncement du guide est formé par exemple par un épaulement, lequel présente notamment une hauteur comprise entre 1.4 mm et 1.5 mm.

L'invention a également pour objet une vanne comportant un ensemble tel que décrit ci-dessus.

La vanne forme avantageusement une vanne EGR.

Cette vanne est notamment agencée pour fonctionner à température élevée, notamment dans une plage de températures jusqu'à 230 degrés.

Dans un exemple de mise en oeuvre de l'invention, la vanne comporte une soupape actionnable par la tige de soupape, notamment liée à celle-ci en liaison indémontable.

L'invention a encore pour objet un ensemble pour une vanne de véhicule automobile :
- un corps de vanne,
- une tige de soupape pouvant coulisser par rapport au corps de vanne,
- un guide agencé pour guider la tige lorsque cette tige coulisse,
- un joint agencé pour assurer, selon trois appuis étanches, l'étanchéité entre la tige, le corps de vanne et le guide.

L'invention a également pour objet un procédé pour réaliser un ensemble tel que décrit ci-dessus, comportant l'étape :
- Placer le joint entre le corps de vanne et le guide, avant d'introduire la tige dans le guide.

De préférence, le procédé comporte l'étape :
- Exercer une contrainte axiale sur le joint en rapprochant le corps de vanne du guide.

Avantageusement le procédé comporte l'étape :
- Introduire la tige dans le guide, cette tige passant dans la lèvre intérieure du joint.

L'invention sera mieux comprise et d'autres détails, caractéristiques et avantages de l'invention apparaîtront à la lecture de la description suivante faite à titre d'exemple non limitatif en référence au dessin annexé dans lequel :

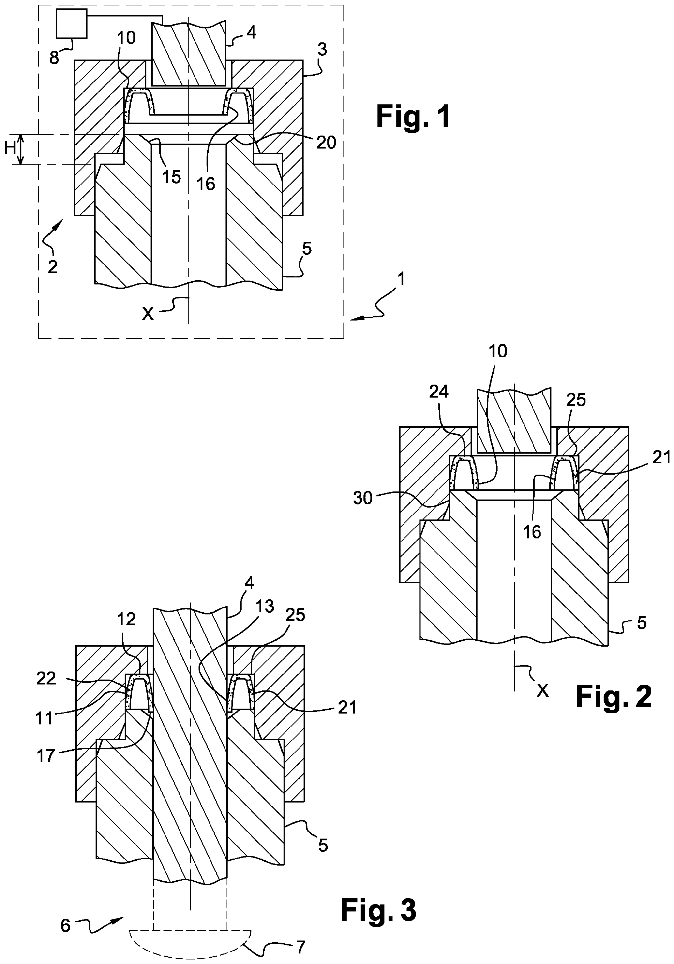

- les figures 1 à 3 sont des vues en coupe, schématiques et partielles, d'une vanne selon un exemple de réalisation de l'invention, à trois étapes successives de fabrication.

On a représenté sur les figures 1 à 3 une vanne EGR 1 comportant un ensemble 2 tel que décrit ci-dessous.

Cette vanne 1 est utilisée dans un circuit de recirculation de gaz d'échappement (ou EGR en anglais, pour Exhaust Gas Recirculation) d'un moteur à combustion interne d'un véhicule automobile. Cette vanne 1 est agencée pour fonctionner à température élevée, notamment dans une plage de températures jusqu'à 230 degrés, températures dues à celles des gaz recirculés qui traversent la vanne 1.

L'ensemble 2 comporte :
- un corps de vanne 3,
- une tige de soupape 4 pouvant coulisser par rapport au corps de vanne 3,
- un guide 5 agencé pour guider la tige 4 lorsque cette tige coulisse,
- un joint 10 agencé pour assurer l'étanchéité autour de la tige 4, ce joint 10 étant placé entre le corps de vanne 3 et le guide 5, ce joint 10 venant en contact avec le corps de vanne selon deux appuis étanches distincts 11 et 12.

La tige 4 est solidaire d'un clapet 7 formant ainsi une soupape 6 pouvant être déplacée en coulissement selon un axe X grâce à un mécanisme 8 transformant une rotation en translation de la tige 4. Ce mécanisme 8 comporte un moteur électrique non représenté.

Ce mécanisme 8 permet ainsi d'actionner la vanne 1 en ouverture ou fermeture de la soupape 6 pour réguler la circulation des gaz d'échappement.

Le guide 5 comporte un renfoncement 15 en regard de la tige 4, ce renfoncement 15 s'étendant tout autour de la tige 4, et le joint 10 comporte une lèvre intérieure 16, s'étendant par son extrémité 17 partiellement dans le renfoncement 15 ménagé par le guide, en fin de fabrication comme illustré sur la figure 3.

Ceci permet de déformer le joint 10 pour le soumettre à une certaine contrainte axiale, suivant l'axe X de coulissement de la tige 4. Durant cette mise sous contrainte, le joint 10 se déforme quelque peu et cette lèvre intérieure 16 se déplace vers le renfoncement 15.

La lèvre intérieure 16 vient en appui étanche 13 contre la tige 4, comme on peut le voir sur la figure 3. Cette tige de soupape 4, lors de ses déplacements, glisse sur le joint 10 en préservant l'appui étanche 13.

La lèvre intérieure 16 est en contact avec un fond 20 du renfoncement 15 du guide 5, en fin de montage.

Le joint 10 comporte une lèvre extérieure 21 autour de la lèvre intérieure 16, cette lèvre extérieure 21 venant en appui étanche 11 avec le corps de vanne 3, plus précisément avec une paroi longitudinale 22 du corps de vanne 3.

Le cas échéant, la lèvre extérieure 21 se raccorde à la lèvre intérieure 16 via un bandeau annulaire 24.

Le bandeau annulaire 24 comporte une concavité tournée vers le guide 5.

Le bandeau 24 du joint vient en appui étanche 12 avec le corps de vanne 3, plus précisément avec une paroi transversale 25 du corps de vanne 3.

Le joint 10 est contraint, à savoir soumis à des contraintes, de manière permanente axialement, selon l'axe de coulissement X de la tige de soupape 4, lorsqu'il est en place dans l'ensemble, notamment par appui du bandeau 24 du joint 10 sur le corps de vanne 3. Ceci permet d'avoir un appui étanche efficace.

Le joint 10 est également contraint de manière permanente transversalement, selon un axe perpendiculaire à l'axe de coulissement X de la tige de soupape, lorsqu'il est en place dans l'ensemble.

Le joint définit ainsi trois appuis étanches 11, 12 et 13, notamment l'un d'eux sur la lèvre intérieure de forme annulaire 16, l'un d'eux sur la lèvre extérieure de forme annulaire 21 et l'un d'eux sur le bandeau 24.

Le joint 10 est réalisé d'un seul tenant.

La lèvre intérieure 16 présente un diamètre intérieur compris entre 5 mm et 5,5 mm.

Le joint 10 est réalisé notamment en matériau Rulon^{®}.

Le guide 5 est réalisé notamment en bronze fritté ou usiné.

Le renfoncement 15 du guide 5 est formé par un épaulement 30 lequel présente une hauteur H comprise entre 1.4 mm et 1.5 mm.

L'invention a également pour objet un procédé pour réaliser l'ensemble 2 tel que décrit ci-dessus, comportant l'étape :
- Placer le joint 10 entre le corps de vanne 3 et le guide 5, avant d'introduire la tige 4 dans le guide (étape de la figure 1).

Puis, le procédé comporte l'étape :
- Exercer une contrainte axiale sur le joint 10 en rapprochant le corps de vanne 3 du guide 5 (étape de la figure 2). Ensuite le procédé comporte l'étape :
   - Introduire la tige 4 dans le guide 5, cette tige passant dans la lèvre intérieure 16 du joint 10, de manière à aboutir à l'assemblage final de la figure 3.

## Revendications

1. Ensemble (2) pour une vanne (1) de véhicule automobile, cet ensemble comportant :
- un corps de vanne (3),
- une tige de soupape (4) pouvant coulisser par rapport au corps de vanne,
- un guide (5) agencé pour guider la tige lorsque cette tige coulisse,
- un joint (10) agencé pour assurer l'étanchéité autour de la tige, ce joint étant placé entre le corps de vanne et le guide, ce joint venant en contact avec le corps de vanne selon deux appuis étanches (11, 12) distincts,
**caractérisé en ce que** le guide comporte un renfoncement (15) en regard de la tige, ce renfoncement s'étendant au moins partiellement autour de la tige, et le joint (10) comporte une lèvre (16), notamment une lèvre intérieure, s'étendant au moins partiellement dans le renfoncement ménagé par le guide.

2. Ensemble selon la revendication précédente, la lèvre intérieure venant en appui étanche (13) contre la tige.

3. Ensemble selon l'une des revendications précédentes, le joint comportant une lèvre extérieure (21) autour de la lèvre intérieure, cette lèvre extérieure venant en appui étanche (11) avec le corps de vanne, notamment avec une paroi longitudinale du corps de vanne.

4. Ensemble la revendication précédente, la lèvre extérieure se raccordant à la lèvre intérieure via un bandeau annulaire (24).

5. Ensemble selon la revendication précédente, le bandeau du joint vient en appui étanche (10) avec le corps de vanne, notamment avec une paroi transversale (25) du corps de vanne.

6. Ensemble selon l'une des revendications précédentes, le joint (10) étant contraint, à savoir soumis à des contraintes, de manière permanente axialement, selon l'axe de coulissement de la tige de soupape, lorsqu'il est en place dans l'ensemble, notamment par appui du bandeau du joint sur le corps de vanne.

7. Ensemble selon l'une des revendications 5 et éventuellement 6, le joint définissant trois appuis étanches (10, 11, 12), notamment l'un d'eux sur la lèvre intérieure, l'un d'eux sur la lèvre extérieure et l'un d'eux sur le bandeau.

8. Vanne comportant un ensemble selon l'une des revendications précédentes.

9. Vanne selon la revendication précédente, formant une vanne EGR.

10. Vanne selon la revendication précédente, agencée pour fonctionner à température élevée, notamment dans une plage de températures jusqu'à 230 degrés.

11. Procédé pour réaliser un ensemble selon l'une des revendications 1 à 7, comportant l'étape :
- Placer le joint entre le corps de vanne et le guide, avant d'introduire la tige dans le guide.

12. Procédé selon la revendication précédente, comportant l'étape :
- Exercer une contrainte axiale sur le joint en rapprochant le corps de vanne du guide.

13. Procédé selon l'une des revendications 11 et 12, comportant l'étape :
- Introduire la tige dans le guide, cette tige passant dans la lèvre intérieure du joint.

## Patentansprüche

1. Anordnung (2) für ein Ventil (1) eines Kraftfahrzeugs, wobei diese Anordnung umfasst:
- einen Ventilkörper (3),
- eine Ventilspindel (4), die bezüglich des Ventilkörpers gleiten kann,
- eine Führung (5), die dazu eingerichtet ist, die Spindel zu führen, wenn diese Spindel gleitet,
- eine Dichtung (10), die dazu eingerichtet ist, die Dichtigkeit um die Spindel herum sicherzustellen, wobei diese Dichtung zwischen dem Ventilkörper und der Führung angeordnet ist, wobei diese Dichtung mit dem Ventilkörper an zwei verschiedenen dichten Anlageflächen (11, 12) in Kontakt kommt,
**dadurch gekennzeichnet, dass** die Führung eine Vertiefung (15) gegenüber der Spindel umfasst, wobei sich diese Vertiefung wenigstens teilweise um die Spindel herum erstreckt, und die Dichtung (10) eine Lippe (16) umfasst, insbesondere eine Innenlippe, die sich wenigstens teilweise in der von der Führung gebildeten Vertiefung erstreckt.

2. Anordnung nach dem vorhergehenden Anspruch, wobei die Innenlippe an der Spindel dicht zur Anlage (13) kommt.

3. Anordnung nach einem der vorhergehenden Ansprüche, wobei die Dichtung eine Außenlippe (21) um die Innenlippe herum umfasst, wobei diese Außenlippe am Ventilkörper, insbesondere an einer Längswand des Ventilkörpers, dicht zur Anlage (11) kommt.

4. Anordnung nach dem vorhergehenden Anspruch, wobei sich die Außenlippe über ein ringförmiges Band (24) an die Innenlippe anschließt.

5. Anordnung nach dem vorhergehenden Anspruch, wobei das Band der Dichtung am Ventilkörper, insbesondere an einer Querwand (25) des Ventilkörpers, dicht zur Anlage (10) kommt.

6. Anordnung nach einem der vorhergehenden Ansprüche, wobei die Dichtung (10) dauerhaft axial entlang der Gleitachse der Ventilspindel beansprucht, nämlich Belastungen ausgesetzt wird, wenn sie sich an ihrem Platz in der Anordnung befindet, insbesondere durch Druck des Bandes der Dichtung auf den Ventilkörper.

7. Anordnung nach einem der Ansprüche 5 und eventuell 6, wobei die Dichtung drei dichte Anlagen (10, 11, 12) definiert, insbesondere eine davon an der Innenlippe, eine davon an der Außenlippe und eine davon an dem Band.

8. Ventil, welches eine Anordnung nach einem der vorhergehenden Ansprüche umfasst.

9. Ventil nach dem vorhergehenden Anspruch, welches ein AGR-Ventil bildet.

10. Ventil nach dem vorhergehenden Anspruch, welches dazu eingerichtet ist, bei höherer Temperatur zu arbeiten, insbesondere in einem Temperaturbereich bis 230 Grad.

11. Verfahren zur Herstellung einer Anordnung nach einem der Ansprüche 1 bis 7, welches folgenden Schritt umfasst:
- Anbringen der Dichtung zwischen dem Ventilkörper und der Führung vor dem Einführen der Spindel in die Führung.

12. Verfahren nach dem vorhergehenden Anspruch, welches folgenden Schritt umfasst:
- Ausüben einer axialen Belastung auf die Dichtung durch Annähern des Ventilkörpers an die Führung.

13. Verfahren nach einem der Ansprüche 11 und 12, welches folgenden Schritt umfasst:
- Einführen der Spindel in die Führung, wobei sich diese Spindel durch die Innenlippe der Dichtung hindurchbewegt.

## Claims

1. Assembly (2) for a valve (1) of a motor vehicle, this assembly comprising:
- a valve body (3),
- a valve stem (4) capable of sliding with respect to the valve body,
- a guide (5) arranged to guide the stem when said stem slides,
- a seal (10) arranged to ensure the seal around the stem, this seal being placed between the valve body and the guide, this seal coming into contact with the valve body by two distinct tight pressure bearings (11, 12),
**characterized in that** the guide comprises a recess (15) facing the stem, this recess extending at least partially around the stem, and the seal (10) comprises a lip (16), notably an inner lip, extending at least partially into the recess formed by the guide.

2. Assembly according to the preceding claim, the inner lip coming to bear tightly (13) against the stem.

3. Assembly according to one of the preceding claims, the seal comprising an outer lip (21) around the inner lip, this outer lip coming to bear tightly (11) with the valve body, notably with a longitudinal wall of the valve body.

4. Assembly according to the preceding claim, the outer lip being connected to the inner lip via an annular capping (24).

5. Assembly according to the preceding claim, the capping of the seal coming to bear tightly (10) with the valve body, notably with a transverse wall (25) of the valve body.

6. Assembly according to one of the preceding claims, the seal (10) being constrained, in other words subjected to strains, permanently axially, along the sliding axis of the valve stem, when it is placed in the assembly, notably by the capping of the seal bearing on the valve body.

7. Assembly according to one of Claims 5 and possibly 6, the seal defining three tight pressure bearings (10, 11, 12), notably one of them on the inner lip, one of them on the outer lip and one of them on the capping.

8. Valve comprising an assembly according to one of the preceding claims.

9. Valve according to the preceding claim, forming an EGR valve.

10. Valve according to the preceding claim, arranged to operate at high temperature, notably within a range of temperatures up to 230 degrees.

11. Method for producing an assembly according to one of Claims 1 to 7, comprising the step of:
- placing the seal between the valve body and the guide, before introducing the stem into the guide.

12. Method according to the preceding claim, comprising the step of:
- exerting an axial constraint on the seal by bringing the valve body closer to the guide.

13. Method according to one of Claims 11 and 12, comprising the step of:
- introducing the stem into the guide, this stem passing into the inner lip of the seal.
